# EUROPÄISCHE PATENTSCHRIFT

(11) **EP 4 267 797 B1**
(45) Veröffentlichungstag und Bekanntmachung des Hinweises auf die Patenterteilung: **14.08.2024**
(21) Anmeldenummer: 21839354.4
(22) Anmeldetag: 10.12.2021
(51) Int. Cl.: E01B 31/13, B23C 5/24, B23C 3/00

(54) **VORRICHTUNG MIT EINEM ROTATIONSBEWEGLICH ANTREIBBAREN FRÄSKÖRPER**
DEVICE WITH A ROTATIONALLY DRIVABLE MILLING BODY
DISPOSITIF DOTÉ D'UN CORPS DE FRAISAGE POUVANT ÊTRE ENTRAÎNÉ EN ROTATION

(30) Priorität: 22.12.2020 DE 102020134660
(43) Veröffentlichungstag der Anmeldung: 01.11.2023
(73) Patentinhaber: Schweerbau International GmbH & Co. KG, 31655 Stadthagen (DE)
(72) Erfinder: MEVERT, Frank, 31714 Lauenhagen (DE)
(74) Vertreter: Scheffler, Jörg
(86) Internationale Anmeldenummer: PCT/EP2021/085214
(87) Internationale Veröffentlichungsnummer: WO 2022/135975

(56) Entgegenhaltungen:
- EP-A1- 2 177 664
- EP-A2- 0 884 124

## Beschreibung

Die Erfindung betrifft eine insbesondere mobile Vorrichtung mit einem rotationsbeweglich antreibbaren Fräskörper mit mehreren am Umfang angeordneten, jeweils eine geometrisch bestimmte Schneide aufweisenden Schneidenträger zur spanabhebenden Bearbeitung eines Profils, insbesondere einer Schiene eines Gleiskörpers, wobei das Profil ein Querprofil mit einem eine Lauffläche bildenden zentralen Bereich und mit zumindest einem konvexen Randbereich aufweist, wobei die Vorrichtung relativ zu dem Fräskörper bewegliche Schneidenträger aufweist, die mittels zumindest eines einstellbaren Betätigungskörpers an dem Fräskörper zur Einstellung unterschiedlicher Arbeitspositionen während des Eingriffs der Schneide des jeweiligen beweglichen Schneidenträgers in das Profil derart radial in Bezug auf eine Rotationsachse des Fräskörpers auslenkbar angeordnet sind, dass eine Schnitttiefe der Schneide mittels des einstellbaren Betätigungskörpers während der Bearbeitung des Werkstücks veränderbar ist, indem der Betätigungskörper während der rotierenden Umlaufbewegung des Fräskörpers zyklisch mit einer eine Steigung aufweisenden nockenförmigen Ausformung des Schneidenträgers in Kontakt kommt und dadurch zusätzlich zu der rotatorischen Bewegung zyklisch eine stetige radiale Auslenkung der Schneide erfolgt, sodass mittels des Betätigungskörpers die Schnitttiefe einstellbar ist.

Aufgrund vergleichsweise hoher Achslasten und hoher Fahrgeschwindigkeiten werden Schienen oft bis zur Fließgrenze des Schienenwerkstoffs beansprucht und unterliegen daher einem Verschleiß, der sich nachteilig auf das Querprofil insbesondere im Bereich der Lauffläche des Schienenkopfs auswirkt.

Zur Beseitigung der an der Lauffläche von Gleisschienen während des Fahrbetriebs entstehenden Riffeln und Wellen, die die Radsätze der Fahrzeuge zu Schwingungen anregen, welche die Laufruhe der Fahrzeuge stören, einen übermäßigen Verschleiß des Gleisoberbaus und der Fahrzeuge verursachen sowie Fahrgeräusche entstehen lassen, ist eine verschleißabhängige Nachbearbeitung erforderlich.

Hierzu ist beispielsweise ein Verfahren für die Bearbeitung von Eisenbahnschienen bekannt, bei welchem eine Vielzahl von rotierenden Schleifscheiben eingesetzt wird, die neben- und hintereinander angeordnet sind, wobei ein Teil der Schleifscheiben entsprechend dem Ursprungsprofil der Schienenköpfe geneigt ist. Mit einem derartigen Schleifverfahren lässt sich eine bessere Annäherung an das Ursprungsprofil der Schienenköpfe erreichen.

Es sind auch sogenannte Topfschleifer bekannt, die stirnseitig in Eingriff mit der Schienenoberfläche gebracht werden und vorzugsweise mit einem Kippwinkel gegenüber der zu schleifenden Schienenoberfläche angestellt sind.

Zum Schleifen der Köpfe von Eisenbahnschienen werden auch sogenannte Rutschersteine eingesetzt. Hierbei werden Schleifzüge eingesetzt, an deren Unterseite Schleifsteine angeordnet sind, die unter Druck über die Schienenoberflächen geführt werden. Dem Rutscherstein-Schleifen liegt eine oszillierende translatorische Bewegung des Schleifkörpers entlang der Schiene während der Bewegung des Fahrzeugs zugrunde. Durch die Konturierung der Schleifkörper, die während des Gebrauchs ihre Formgebung bei fortschreitendem Verschleiß anpassen, wird prinzipiell eine gute Oberflächenqualität und Maßhaltigkeit erreicht.

Die EP 2 525 933 B1 bezieht sich auf eine Vorrichtung zum spanabhebenden Nachbearbeiten der Lauffläche eines Schienenkopfs mit einem entlang des Schienenkopfs geführten Gestell. Die Bearbeitungswerkzeuge sind als gegensinnig drehend antreibbare Stirnfräser ausgebildet, deren Drehachsen in einer gemeinsamen Ebene verlaufen und deren Schneidbereiche einander quer zur Längsrichtung des Schienenkopfs überlappen.

Zur Erhöhung der Bearbeitungsgeschwindigkeit ist es beispielsweise aus der DE 32 22 208 A1 bekannt, Fräswerkzeuge einzusetzen, deren in mehreren axialen Gruppen über den Umfang des Messerkopfs verteilte Schneiden das Schienenkopfprofil nachbilden.

Der durch ein solches Umfangfräsen bedingte bogenförmige Schnittverlauf der einzelnen Schneiden des Fräswerkzeugs führt allerdings zu einer in Schienenlängsrichtung gewellten Oberfläche des Schienenkopfs, wobei sich die Oberflächenqualität mit zunehmender Vorschubgeschwindigkeit wegen des größer werdenden Abstands der Spanabträge aufeinanderfolgender Schneiden verschlechtert.

Auch die WO 02/06587 A1 beschreibt ein Verfahren zum Reprofilieren mindestens des konvexen Teils des Schienenkopf-Querschnittprofils einer Schiene durch Umfangfräsen mit mehr als fünf in Längsrichtung der Schiene nebeneinanderliegenden Fräsbahnen.

Weitere Vorrichtungen zum spanabhebenden Nachbearbeiten, insbesondere zum Fräsen von im Gleis verlegten Schienenköpfen, werden in den Druckschriften EP 0 952 255 B1, US 5,549,505 A, EP 0 668 398 B1, EP 0 668 397 B1, US 4,275,499 A; EP 0 148 089 A2 und DE 32 22 208 C2 beschrieben.

Außerdem sind beispielsweise durch die DE 28 41 506 C2 Vorrichtungen bekannt, bei denen die Schienenköpfe mit einem sogenannten Schienenhobel bearbeitet werden. Nachteilig beim Hobeln, vor allem gegenüber den Fräsverfahren, sind ein höherer Kraftbedarf in Vorschubrichtung, ein langer Span und/oder die oft längeren Stillstandszeiten.

Die AT 400 863 B beschreibt eine Vorrichtung zum spanabhebenden Nachbearbeiten eines Schienenkopfs mithilfe eines entlang des Bearbeitungsstreifens geführten, umlaufenden Werkzeugs, bei dem die Schneiden in Trägern gehalten sind und die Glieder einer endlos um Umlenkräder geführten Gliederkette bilden.

Aus der EP 0 884 124 A2 ist ein Fräswerkzeug mit wechselbaren Wendeschneidplatten und einem Werkzeugkörper bekannt, an dem die verstellbar gehaltene Schneidplatte direkt geklemmt ist. Dazu ist der Werkzeugkörper mit einer Ausnehmung oder einem Radialvorsprung mit einer Sitzfläche versehen. Die Schneidplatte liegt mit ihrer Basisfläche an dieser Sitzfläche an und wird von einem Keil gegen diese gepresst. Zur Justierung dient beispielsweise eine Exzenterschraube, ein Nocken oder ein Keil.

Um eine plane Oberfläche zu erhalten, schlägt die gattungsgemäße EP 2 177 664 A1 vor, die Schneide während der spanabhebenden Bearbeitung des Werkstücks entlang einer geraden Bahn zu bewegen, sodass eine Nachbearbeitung, beispielsweise ein Schleifen, entbehrlich ist. Aus der EP 2 177 664 A1 ist es darüber hinaus auch bekannt, die Schneiden einzelner Spurbahnen des Querprofils separat zu aktivieren, beispielsweise auch in einer der lateralen Seite der Schiene zugeordneten äußeren Spurbahn, indem verschiedenen Spurbahnen unabhängige Betätigungskörper zugeordnet sind.

Dadurch können beim Beispiel der Schienenbearbeitung im Bereich des Herzstücks, der Flügelschienen und der Zungen einer Weiche eine oder mehrere Spurbahnen deaktiviert werden, sodass in dem dieser Spurbahn entsprechenden Abschnitt des Querprofils keine Bearbeitung und somit kein Materialabtrag erfolgt. Ein solcher, grundsätzlich unerwünschter Abtrag führt anderenfalls zu ungeeigneten Querprofilgeometrien der Weiche. Beispielsweise laufen im Bereich des Herzstücks zwei Schienen zusammen, sodass eine Unterscheidung des lateralen und des medialen Abschnitts des Querprofils in diesem Bereich nicht vorgenommen wird.

In der Praxis ist es üblich, für die Oberfläche des Querprofils im zentralen Bereich der Lauffläche keine Steigung bzw. keine konvexe Geometrie gegenüber dem Randbereich vorzusehen.

Als nachteilig erweist es sich in der Praxis, dass im Randbereich des Querprofils einer Weiche durch Deaktivieren der entsprechenden Spurbahn nach dem Prinzip der in der EP 2 177 664 A1 offenbarten technischen Lehre zwar die Bearbeitung vorübergehend unterbrochen werden kann. Allerdings entsteht durch das bloße deaktivieren der entsprechenden Schneiden in der Praxis bei der Fräsbearbeitung kein stetiger Verlauf des Querprofils. Vielmehr können abweichende Querprofilabschnitte mit beispielsweise unerwünschten Sprungstellen auftreten. Zudem bleibt das Profil in diesem Querprofilabschnitt unbearbeitet, sodass insbesondere oberflächennahe Fehlstellen, wie beispielsweise Risse, nicht entfernt werden können.

Der Erfindung liegt die Aufgabe zugrunde, mittels der Vorrichtung eine Bearbeitung unterschiedlicher Profile zu ermöglichen. Weiterhin sollen unterschiedliche Querprofilgeometrien während der Bearbeitung des Profils erzeugt werden können. Darüber hinaus soll ein Verfahren zur Bearbeitung geschaffen werden, mit dem während der Bearbeitung des Profils unterschiedliche Querprofilgeometrien erzeugt werden können.

Die erstgenannte Aufgabe wird erfindungsgemäß mit einer Vorrichtung gemäß den Merkmalen des Anspruchs 1 gelöst. Die weitere Ausgestaltung der Erfindung ist den Unteransprüchen zu entnehmen.

Erfindungsgemäß ist also eine Vorrichtung vorgesehen, bei der durch zumindest einen Betätigungskörper eine erste Funktionsstellung des beweglichen Schneidenträgers, in der ausschließlich die Schneiden einer ersten Gruppe von beweglichen Schneidenträgern einer Spurbahn oder mehrerer Spurbahnen mit dem Profil in Eingriff kommt, und alternativ eine zweite Funktionsstellung oder weitere Funktionsstellungen einstellbar sind, in der ausschließlich die Schneiden einer zweiten oder einer weiteren Gruppe mehrerer an dem Fräskörper angeordneter Schneidenträger derselben Spurbahn oder derselben Spurbahnen mit dem Profil in Eingriff kommen, wobei die Schneidenträger der ersten und zweiten Gruppe nicht identisch sind. Die Erfindung geht dabei von der Erkenntnis aus, dass bezogen auf jede einzelne von möglichen mehreren Spurbahnen zur Bearbeitung verschiedener Querprofilabschnitte jeweils verschiedene Formen und Geometrien durch unterschiedliche Funktionsstellungen mittels des zumindest einen Betätigungskörpers erzeugt werden können. Hierzu werden innerhalb einer bestimmten Spurbahn durch den Betätigungskörper verschiedene Gruppen von Schneidenträgern aktiviert oder deaktiviert, um so unterschiedliche, jedoch über das gesamte Querprofil stetige Querprofilgeometrien zu erzeugen, die insbesondere auf die besonderen Anforderungen an ein abweichendes Querprofil im Bereich einer Weiche gegenüber anderen Streckenabschnitten des Profils abgestimmt sein können.

Im Sinne der vorliegenden Erfindung ist die radiale Auslenkung nicht auf eine Vergrößerung des Abstands von der Rotationsachse des Fräskörpers beschränkt. Vielmehr kann die gewünschte zeitweise ebene Bewegungsbahn der Schneide durch Überlagerung der rotierenden Bewegung und einer zu der Drehachse nach innen oder nach außen gerichteten radialen Bewegung erreicht werden.

Hierzu sind gemäß einer besonders vorteilhaften Ausführungsform der erfindungsgemäßen Vorrichtung zumindest einzelne der Schneidenträger der zweiten Gruppe unbeweglich an dem Fräskörper angeordnet. Indem an dem Fräskörper in zumindest einer Spurbahn des Fräskörpers über den Umfang verteilt zumindest einzelne Schneidenträger während der Bearbeitung unbeweglich gegenüber bzw. relativ zu dem Fräskörper angeordnet sind, kommen die Schneiden dieser Schneidenträger nur dann in Eingriff, wenn die Schneiden der beweglichen Schneidenträger nicht radial nach außen ausgelenkt werden, insbesondere also vollständig deaktiviert sind. Beispielsweise sind hierzu zumindest in einer Spurbahn auf dem Umfang des Fräskörpers abwechselnd bewegliche und feste Schneidenträger angeordnet und bilden die verschiedenen Gruppen, wobei die beweglichen Schneidenträger in ihrer radial nach außen verlagerten Position radial gegenüber den festen Schneidenträgern hervortreten. In einer Weiche werden die beweglichen Schneidenträger dieser Spurbahn, beispielsweise der lateralen Spurbahn, deaktiviert, sodass nur eine reduzierte Schnitttiefe und somit der verringerte Abtrag der festen Schneiden erfolgt. Das Querprofil ist somit im Ergebnis gegenüber einer alternativen Bearbeitung durch die Schneiden der beweglichen Schneidenträger erhaben. In der anderen Funktionsstellung beschränkt sich der Abtrag aufgrund der größeren radialen Erstreckung auf die beweglichen Schneidenträger. Somit lassen sich erstmals bedarfsweise verschiedene Profile in derselben Spurbahn erzeugen, die jeweils eine homogen und stetig verlaufende Querprofilgeometrie erzeugen.

Dabei ist die Erfindung nicht etwa auf die Kombination von beweglichen und unbeweglichen Schneidenträgern beschränkt. Vielmehr können alle Schneidenträger der verschiedenen Gruppen beweglich ausgeführt sein und durch separate Betätigungskörper alternativ auslenkbar sein, sodass während der Fräsbearbeitung verschiedene Profile erzeugt und dabei die Vorteile des sogenannten Drehhobelns, nämlich der Fräsbearbeitung mit einer abschnittsweise ebenen, zu der Längserstreckung des Profils parallelen Bewegungsbahn und der damit einhergehenden verbesserten Bearbeitungsqualität für die verschiedenen Gruppen der Schneidenträger und demensprechend für verschiedene Querprofilgeometrien, erreicht werden.

Die beweglichen Schneidenträger verschiedener Gruppen haben hierzu beispielsweise konvexe Ausformungen als Kontaktfläche für den jeweiligen Betätigungskörper, die in unterschiedlichen Querschnittsebenen bezogen auf die Rotationsachse des Fräskörpers angeordnet sind, sodass mehrere nebeneinanderliegende, derselben Spurbahn zugeordnete Betätigungskörper realisiert werden können. Vorzugsweise sind in der Richtung parallel zu der Rotationsachse des Fräskörpers auch mehrere nebeneinanderliegende Betätigungskörper gemeinsam nicht breiter als der mit den zugeordneten Schneidenträgern dieser Spurbahn zu bearbeitende Querprofilabschnitt.

Die Vorrichtung ist auch nicht auf zwei Gruppen von Schneidenträgern in einer jeweiligen Spurbahn beschränkt. Vielmehr lassen sich prinzipiell auch drei oder mehr Gruppen realisieren, wobei eine mechanische Auslenkung durch einen kontaktierenden Betätigungskörper aufgrund der vorhandenen Platzverhältnisse mit einem zusätzlichen konstruktiven Aufwand verbunden ist. In den Fällen von drei und mehr Gruppen können die beweglichen Schneidenträger vorzugsweise durch geeignete, an dem Fräskörper angeordnete und somit als gemeinsam mit dem Fräskörper rotierende Aktoren ausgeführte Betätigungskörper radial ausgelenkt werden, wobei eine Steuereinheit zur insbesondere auch drahtlosen Übertragung von Steuerbefehlen für die Betätigungskörper oder die Aktoren dient. Die Steuerbefehle können auch unter Berücksichtigung von Streckeninformationen, insbesondere also der Position und relevanter Parameter von Weichen erzeugt werden, sodass eine automatisierte Bearbeitung erfolgen kann.

In der Praxis hat es sich bei Versuchen bereits bewährt, wenn die Vorrichtung mehrere in unterschiedlichen, in Richtung der Rotationsachse in benachbarten Spurbahnen paralleler Querschnittsebenen des Fräskörpers nebeneinander angeordnete Schneidenträger aufweist, wobei zumindest in einer einer Lauffläche des Querprofils zugeordneten Spurbahn bewegliche Schneidenträger angeordnet sind und zumindest in einer einem lateralen und/oder einem medialen Randbereich des Querprofils zugeordneten Spurbahn verschiedene Gruppen von Schneidenträgern mit beweglichen und unbeweglichen Schneidenträgern angeordnet sind. Die alternative Fräsbearbeitung zur Herstellung verschiedener Geometrien eines bestimmten Querprofilabschnitts ist daher auf die Querprofilbereiche beiderseits der Lauffläche beschränkt, sodass im Bereich der erhöhten Qualitätsanforderungen, wie sie für die Lauffläche gelten, alle Schneidenträger der Herstellung derselben Geometrie dienen und dementsprechend über den Umfang verteilt eine größere Anzahl von Schneidenträgern für das Laufflächenprofil zur Verfügung stehen, deren Schneidenträger in kürzerem Abstand in das Profil eingreifen als die Schneidenträger alternativ aktivierbarer Gruppen.

Der Fräskörper hat vorzugsweise eine Vielzahl von in Umfangsrichtung beabstandet zueinander angeordnete Schneidenträger. Eine weitere, ebenfalls besonders zweckmäßige Ausgestaltungsform wird auch dadurch erreicht, dass benachbarte Schneidenträger verschiedener Spurbahnen in Umfangsrichtung mit einem Versatz angeordnet sind, wobei der Versatz zwischen den benachbarten Schneidenträgern über den Umfang verteilt und/oder zwischen den Schneidenträgern mehrerer paralleler Spurbahnen jeweils übereinstimmend ist. Im Sinne der Erfindung ist der einheitliche Versatz der Schneidenträger benachbarter Spurbahnen größer als null. Dadurch greifen die Schneidenträger derselben Spurbahn und der benachbarten Spurbahnen bei einem Umlauf des Fräskörpers nacheinander in das Profil ein, wodurch die Bearbeitungsqualität weiter verbessert werden kann.

Weiterhin wird eine besonders vorteilhafte Ausgestaltungsform der Erfindung auch dadurch erreicht, dass die beweglichen und/oder unbeweglichen Schneidenträger verschiedener Gruppen derselben Spurbahn in Umfangsrichtung abwechselnd und/oder gleichverteilt an dem Profilkörper angeordnet sind, sodass durch jede der Gruppen ein homogener Materialabtrag erreicht wird. Vorzugsweise sind die Schneidenträger verschiedener Gruppen in übereinstimmender Anzahl an dem Fräskörper über den Umfang gleichverteilt angeordnet.

Der Betätigungskörper kann durch kinematische Kopplung auf den jeweiligen beweglichen Schneidenträger wirken. Hierzu kann der Betätigungskörper innerhalb des hierzu als Hohlkörper oder ringförmig ausgeführten Fräskörpers radial innenliegend angeordnet sein, sodass die beweglichen Schneidenträger durch zyklischen Kontakt mit dem Betätigungskörper radial verlagert werden. Dabei kann der Betätigungskörper als Exzenterkörper, beispielsweise als Nocken ausgeführt sein, um so die Schneidenträger entsprechend radial zu verlagern. Vorzugsweise ist der Exzenterkörper an einer Nockenwelle angeordnet, die in einem festen Drehzahlverhältnis mit dem Fräskörper beispielsweise durch eine kinematische Kopplung rotationsbeweglich angetrieben wird.

Weiterhin ist auch die Auslenkung der Schneidenträger mittels einer Kulisse des Betätigungskörpers realisierbar. Besonders bevorzugt weist die Kontaktfläche eine insbesondere nockenförmige Ausformung mit einer Steigung auf, gegen die der Betätigungskörper zyklisch während der Bearbeitung gleitend und/oder frei rollend anliegt, wobei die Ausformung geometrisch bestimmt und während der Fräsbearbeitung unveränderlich, jedoch bedarfsweise austauschbar ausgeführt ist und an einer der Schneide abgewandten Seite des Schneidenträgers mit dieser beispielsweise auch einteilig verbunden ist. Der Betätigungskörper trifft während der Rotation des Fräskörpers zyklisch auf die Ausformung, wobei an sich bekannte Mittel zur Reduzierung der Reibung vorgesehen sein können, beispielsweise gleitende oder rollende Kontaktflächen.

Dabei ermöglicht eine mehrachsige relative Verlagerung des Betätigungskörpers parallel zu der Querschnittsebene des Fräskörpers eine optimale Einstellmöglichkeit bei der Erzeugung der gewünschten überlagerten Bewegungsbahn der jeweiligen Schneide. Ferner sind auch Aktoren, beispielsweise Piezo-Aktoren, als Betätigungskörper in vorteilhafter Weise einsetzbar.

Die nockenförmige Ausformung kann als eine keilförmige oder rampenförmige Kontaktfläche ausgeführt sein, durch welche der Schneidenträger radial verlagert wird. Dabei ergibt sich für die radiale Auslenkung in Bezug auf die zu erzeugende ebene Bewegungsbahn der Schneide ein nicht-linearer Zusammenhang, sodass gemäß einer besonders bevorzugten Variante der Erfindung die nockenförmige Ausformung zumindest abschnittsweise konkav bzw. konvex ausgeformt ist bzw. nicht parallel zu einer Tangente an der Umlaufbahn der Schneide verläuft, um so bei der Überlagerung der rotierenden Bewegung und der radialen Auslenkung eine ebene Bewegungsbahn der Schneide sicherzustellen.

Bei der Aktivierung der beweglichen Schneidenträger verschiedener Spurbahnen oder der verschiedenen Gruppen von Schneidenträgern derselben Spurbahn hat es sich bereits als besonders sinnvoll erwiesen, wenn die Vorrichtung mehrere unabhängig voneinander einstellbare Betätigungskörper aufweist, die relativ zueinander verstellbar ausgeführt sind, um unterschiedliche radiale Erstreckungen zu realisieren.

Selbstverständlich können die Schneiden eine an die zu erzeugende Oberflächengeometrie des Profils angepasste Form aufweisen, sodass gemäß einer bevorzugten Variante die Schneiden zumindest einzelner Schneidenträger eine konkave Formgebung aufweisen.

Die radiale Auslenkung der Schneidenträger ist erfindungsgemäß nicht auf eine translatorische Bewegung beschränkt. Vielmehr können die beweglichen Schneidenträger hierzu beispielsweise auch an Hebelarmen, insbesondere mit einer Schwenkachse des Hebelarms, parallel zu der Rotationsachse des Fräskörpers beweglich angeordnet sein.

Die erfindungsgemäße Aufgabe wird weiterhin noch mit einem Verfahren zum Betrieb der Vorrichtung dadurch gelöst, dass mittels des zumindest einen Betätigungskörpers innerhalb derselben Spurbahnbahn in der ersten oder der zweiten Funktionsstellung wahlweise die Schneiden einer ersten Gruppe von beweglichen Schneidenträgern bzw. die Schneiden einer zweiten Gruppe an dem Fräskörper angeordneter Schneidenträger mit dem Profil in Eingriff gebracht werden, indem diese relativ zueinander und/oder relativ zu dem Fräskörper radial verlagert werden. Insbesondere wird während der Bearbeitung des Profils und zur Erzeugung verschiedener Querprofilgeometrien desselben Profils zumindest ein Betätigungskörper aktiviert und dadurch alternativ eine erste Funktionsstellung der beweglichen Schneidenträger, in der ausschließlich die Schneiden einer ersten Gruppe von beweglichen Schneidenträgern zumindest einer Spurbahn mit dem Profil in Eingriff kommt, oder eine zweite Funktionsstellung oder weitere Funktionsstellungen eingestellt sind, in der ausschließlich die Schneiden einer weiteren Gruppe mehrerer an dem Fräskörper angeordneter Schneidenträger derselben Spurbahn oder derselben Spurbahnen mit dem Profil in Eingriff kommen. Erfindungsgemäß sind mehrere auf dem Umfang des Fräskörpers verteilte Schneidenträger, die derselben oder mehreren Spurbahnen zugeordnet sein können, zu Gruppen zusammengefasst und werden alternativ bzw. gegebenenfalls auch in Kombination miteinander aktiviert, sodass innerhalb derselben Spurbahn verschiedene Querprofilgeometrien des Profils erzeugt werden können.

Grundsätzlich können die Schneidenträger der zweiten Gruppe im Gebrauch während der Bearbeitung unbeweglich an dem Fräskörper angeordnet sein, während die Schneiden der Schneidenträger zumindest der ersten Gruppe bei der Fräsbearbeitung während des Eingriffs in das Profil bewegt werden und dabei zusätzlich zu der rotierenden Bewegung auch radial nach innen oder außen verlagert bzw. ausgelenkt werden. Dabei wird eine weiter verbesserte Bearbeitungsqualität nach dem Prinzip des Drehhobels erreicht, indem beide Gruppen jeweils durch verschiedene Betätigungskörper auslenkbare Schneidenträger aufweisen.

Die durch die Patentansprüche definierte Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Seitenansicht einer erfindungsgemäßen Vorrichtung mit einem Fräskörper als Träger mehrerer Schneidenträger während der Fräsbearbeitung eines Profils;
- Fig. 2: eine vergrößerte, ausschnittsweise Darstellung eines beweglichen und eines unbeweglichen Schneidenträgers verschiedener Gruppen der Vorrichtung;
- Fig. 3: eine Seitenansicht der Vorrichtung mit mehreren, in parallelen Spuren nebeneinander angeordneten Schneidenträgern;
- Fig. 4: eine vergrößerte Darstellung einer ersten Funktionsstellung zur Auslenkung aller beweglichen Schneidenträger und einer zweiten Funktionsstellung zur Auslenkung einzelner Spurbahnen zugeordneter beweglicher Schneidenträger;
- Fig. 5: eine vergrößerte Darstellung von zwei möglichen Querprofilen entsprechend den in Figur 4 gezeigten verschiedenen Funktionsstellungen;
- Fig. 6: eine vergrößerte Darstellung von zwei unabhängig voneinander beweglichen Schneidenträgern verschiedener Gruppen in derselben Spurbahn;
- Fig. 7: eine Draufsicht auf die mehreren in sechs parallelen Spuren angeordnete Schneidenträgern.

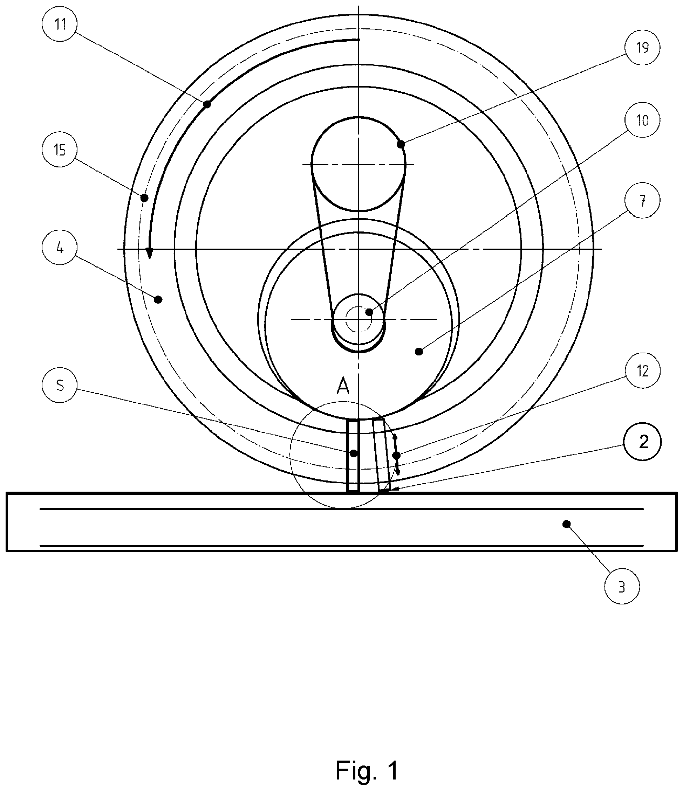

Eine erfindungsgemäße Vorrichtung 1 zur Fräsbearbeitung eines Profils 3 wird nachstehend anhand der Figuren 1 bis 7 näher erläutert. Die Vorrichtung 1 hat einen während der Bearbeitung um die Achse 9 rotationsbeweglich antreibbaren Fräskörper 4, welcher als Träger von umfangsseitig angeordneten Schneidenträgern S mit einer jeweiligen Schneide 2 zum spanabhebenden Bearbeiten des als Schiene eines Gleiskörpers ausgeführten Profils 3 dient. Die Aufgabe der Fräsbearbeitung ist die Glättung und die Wiederherstellung eines gewünschten Querprofils, insbesondere einer zwischen den Randbereichen des Profils 3 eingeschlossenen Lauffläche für ein nicht gezeigtes Schienenrad eines Schienenfahrzeugs. Dabei liegt die besondere Herausforderung der Fräsbearbeitung in der weitestgehenden Vermeidung von Oberflächenwelligkeiten, die prinzipiell bei der Bearbeitung mit Umfangsfräsern, insbesondere in Verbindung mit einer hohen Vorschubgeschwindigkeit der mobilen Vorrichtung entlang des Profils, nicht vollkommen zu vermeiden sind.

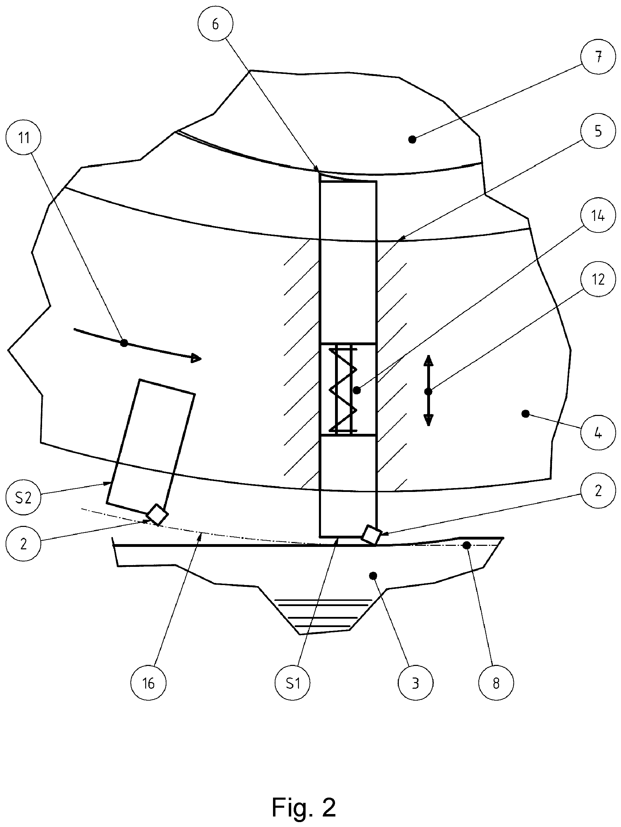

Um die Bearbeitungsqualität zu verbessern, wird bei dem auch als Drehhobeln bezeichneten Verfahren einerseits der Schneidenträger S gemeinsam mit dem Fräskörper 4 auf dessen kreisförmiger Umlaufbahn 15 in Pfeilrichtung 11 bewegt. Diese Bewegung der Schneide 2 entspricht dabei der Bewegung einer Abwälzfräse. Andererseits wird zusätzlich der bewegliche Schneidenträger S1 mit der Schneide 2 an dem Fräskörper 4 zyklisch radial nach außen bewegt. Hierzu ist der Schneidenträger S1 in einer jeweiligen Aufnahme 5 relativ zu dem Fräskörper 4 translatorisch beweglich. Durch die Auslenkung der Schneidenträger S1 in der Aufnahme 5 wird die Schneide 2 über einen bestimmten Zeitraum parallel zur Oberfläche des Profils 3 bewegt. Eine Bewegung der Schneide 2 parallel zur Oberfläche des Profils 3 entspricht der Bewegung eines aus dem Stand der Technik bekannten Hobels. Diese zeitweise parallele Bewegung der Schneide 2 wird durch die Überlagerung der Umlaufbewegung auf der Umlaufbahn 15 und einer Bewegung des Schneidenträgers S1 aus dieser Umlaufbahn 15 heraus in radialer Richtung in Pfeilrichtung 12 erreicht. Die Überlagerung der mit den Pfeilrichtungen 11 und 12 angedeuteten Bewegungen ergibt die in Figur 2 mit einer Strichlinie gekennzeichnete ebene Bahn 8 der Arbeitsbewegung 16 der Schneide 2.

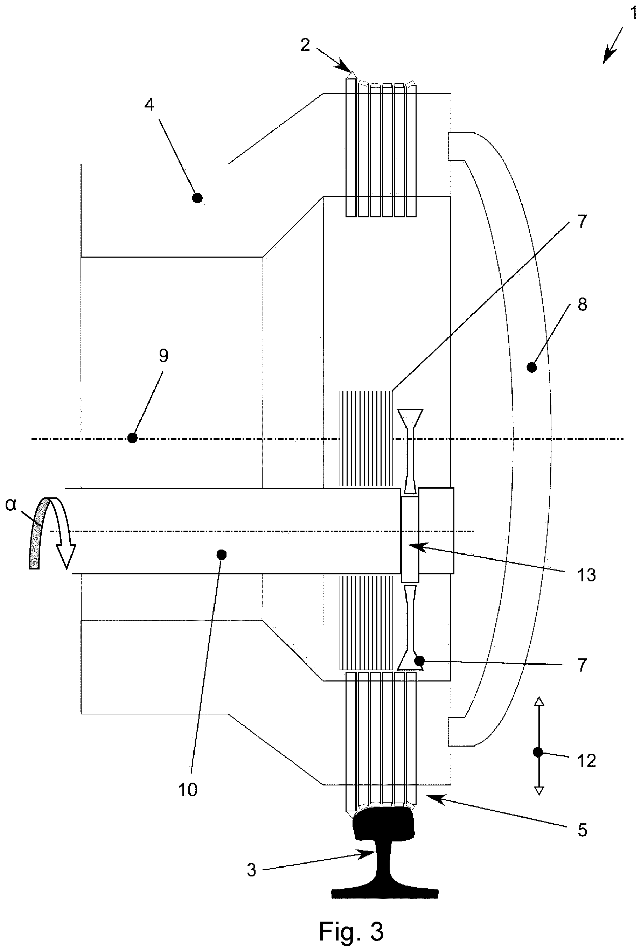

Die Vorrichtung 1 weist mehrere jeweils in einer Aufnahme 5 translatorisch bewegliche Schneidenträger S1 und mehrere unbewegliche Schneidenträger S2 auf. Über den Umfang des Fräskörpers 4 verteilt sind, wie in den Figuren 1 bis 3 dargestellt, eine Vielzahl von Schneidenträgern S1, S2 in Umfangsrichtung hintereinander und, wie in den Figuren 3 bis 7 zu erkennen, nebeneinander in mehreren Spurbahnen 18 angeordnet. Jede Spurbahn 18 dient der Bearbeitung eines Querprofilabschnitts des Profils 3.

Die beweglichen Schneidenträger S1 sind in ihrer jeweiligen Aufnahme 5 an dem Fräskörper 4 verschiebbar angeordnet und weisen jeweils zur radialen Auslenkung eine keilförmige oder nockenförmige Ausformung 6 auf. Während des Umlaufs des Fräskörpers 4 wird die Ausformung 6 des jeweiligen Schneidenträgers S1 an einem frei drehbaren bzw. mittels eines Antriebs 19 drehbeweglich angetriebenen, als Rotationskörper ausgeführten Betätigungskörper 7 entlang bewegt. Bei einem Kontakt zwischen dem Betätigungskörper 7 und der Ausformung 6 wird der Schneidenträger S1 entsprechend der keilförmigen bzw. rampenartigen Geometrie der Ausformung 6 durch den Betätigungskörper 7 in der Pfeilrichtung 12 ausgelenkt. Die Aufnahme 5 weist eine Rückstelleinrichtung 14 auf, sodass der Schneidenträger S1 entgegen einer Rückstellkraft ausgelenkt und durch die Rückstelleinrichtung 14 in ihre Ausgangslage zurückbewegt wird, wenn die Ausformung 6 den Betätigungskörper 7 nicht mehr berührt.

Der um die Achse 9 rotierende Fräskörper 4 weist in Umfangsrichtung zahlreiche nebeneinander angeordnete Aufnahmen 5 auf. Zur Bearbeitung des Profils 3 werden durch das Abrollen bzw. Abgleiten des Betätigungskörpers 7 auf den Ausformungen 6 zumindest einzelne der an den Aufnahmen 5 geführten Schneidenträger S1 zyklisch in Richtung des Profils 3 bewegt, während die Schneide 2 in das Profil 3 eingreift.

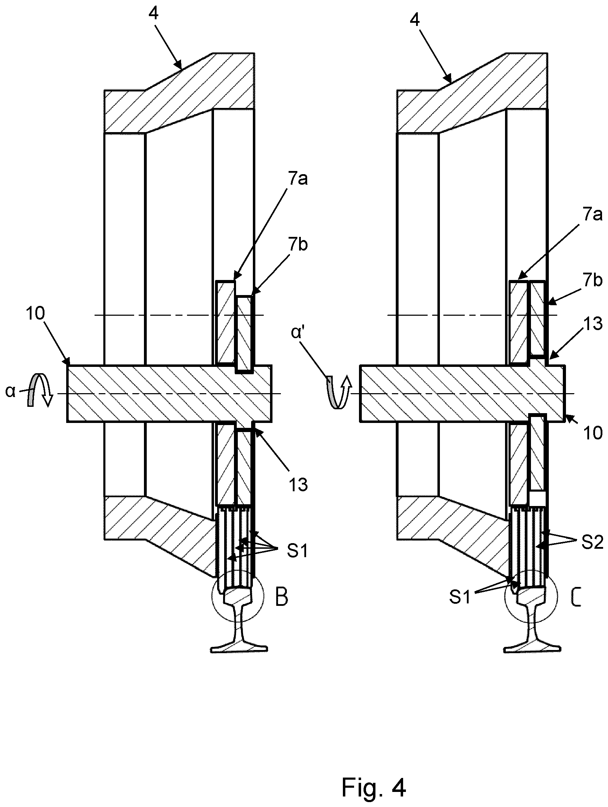

Wie insbesondere in den Figuren 3 und 4 zu erkennen ist, weist die Vorrichtung 1 gemäß der dargestellten Ausführungsform zwei voneinander unabhängig auf einer Welle 10 frei drehbar angeordnete Betätigungskörper 7a, 7b auf, wobei selbstverständlich erfindungsgemäß weitere Betätigungskörper nicht ausgeschlossen sind. Über die Welle 10 werden die von den Betätigungskörpern 7a, 7b zur Auslenkung der Schneiden 2 aufgenommenen Kräfte abgetragen.

Durch eine Änderung der Winkellage α der Welle 10 wird die Lage eines exzentrischen Bereichs 13 der Welle 10 verändert, sodass der daran angeordnete bzw. in dem Bereich 13 gelagerte Betätigungskörper 7b nicht mehr oder nicht mit derselben Amplitude auf die zugeordneten Schneidenträger S1 der zugeordneten Spurbahn 18 einwirken kann. Diese Schneidenträger S1 werden dementsprechend nicht mehr oder nicht so weit ausgelenkt, wodurch die Schneiden 2 dieses Schneidenträgers S1 nicht mehr in das Profil 3 eingreifen und keine oder lediglich eine erheblich eingeschränkte Fräsbearbeitung erfolgt.

Wie in den Figuren 3 und 4 verdeutlicht ist, werden bei einem vollständigen Umlauf des Fräskörpers 4 alle Schneidenträger S1, denen der Betätigungskörper 7a zugeordnet ist, einmal ausgelenkt, während die Schneidenträger S1, denen der Betätigungskörper 7b zugeordnet ist, nur bei einer entsprechenden, in der Figur 4 auf der linken Bildseite dargestellten Winkellage α des Betätigungskörpers 7b ausgelenkt.

Wie auf der rechten Bildseite der Figur 4 zu erkennen, ist alternativ zumindest eine Winkellage α' des Betätigungskörpers 7b einstellbar, in welcher die beweglichen Schneidenträger S1 nicht ausgelenkt werden und daher nicht in das Profil 3 eingreifen. Diese beweglichen Schneidenträger S1, die wie beschrieben bedarfsweise bzw. einstellbar auslenkbar sind, bilden die erste Gruppe von beweglichen Schneidenträgern S1.

Zusätzlich zu der ersten Gruppe der beweglichen Schneidenträger S1 hat der Fräskörper 4 noch eine zweite Gruppe von Schneidenträgern S2 in derselben Spurbahn 18, die in Umfangsrichtung beispielsweise abwechselnd mit den Schneidenträgern S1 der ersten Gruppe angeordnet sein können. Die Summe der beweglichen Schneidenträger S1 und der unbeweglichen Schneidenträger S2 derselben Spurbahn 18 kann übereinstimmend oder abweichend und dem jeweiligen Einsatzzweck angepasst sein.

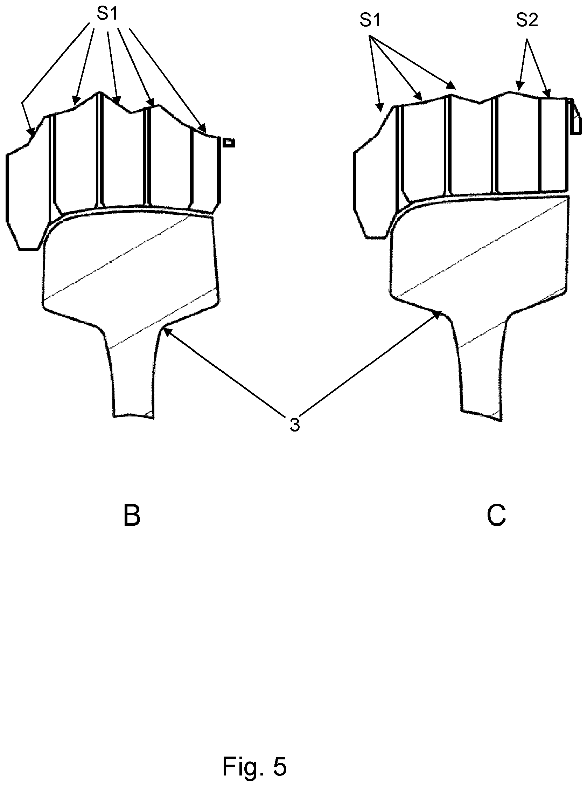

Die Schneidenträger S2 der zweiten Gruppe sind an dem Fräskörper 4 im Gebrauch unbeweglich, vorzugsweise aber austauschbar fixiert. In der ersten Funktionsstellung treten die unbeweglichen Schneidenträger S2 gegenüber den beweglichen Schneidenträgern S1 derart zurück, dass die Schneiden 2 der unbeweglichen Schneidenträger S2 nicht mit dem Profil 3 ein Eingriff kommen können. Diese erste Funktionsstellung und das daraus entstehende Querprofil der Schneidenträger S1 ist in der Figur 5 auf der linken Bildseite dargestellt.

Demgegenüber ist eine zweite Funktionsstellung durch Deaktivierung des Betätigungskörpers 7b mit der Winkellage α' einstellbar, in der ausschließlich die Schneiden 2 der der zweiten Gruppe zugeordneten unbeweglichen Schneidenträger S2 in das Profil 3 eingreifen, weil die beweglichen Schneidenträger S1 gegenüber den unbeweglichen Schneidenträgern S2 zurücktreten. Die zweite Funktionsstellung und das daraus entstehende Querprofil der Schneidenträger S1 sowie der Schneidenträger S2 ist in der Figur 5 auf der rechten Bildseite dargestellt. Hierdurch lassen sich erstmals auch während der unterbrechungsfreien Fräsbearbeitung, insbesondere in unterschiedlichen Streckenabschnitten des Profils 3, verschiedene Querprofilgeometrien erzeugen, wie dies beispielsweise im Bereich von Weichen erforderlich ist.

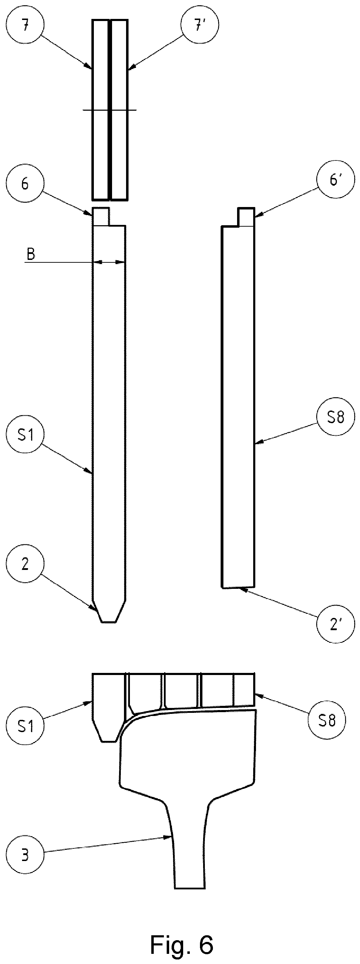

In Figur 6 ist ergänzend noch eine Variante der Vorrichtung 1 dargestellt, bei welcher zwei Gruppen unterschiedlicher Schneidenträger S1, S8 vorgesehen sind, die, anders als in der Figur 2 gezeigt, jeweils als bewegliche Schneidenträger S1, S8 ausgeführt sind. Zum besseren Verständnis sind die verschiedenen Schneidenträger S1, S8 in Figur 6 nebeneinander dargestellt. Diese sind tatsächlich in Umfangsrichtung hintereinander angeordnet, sodass die Schneiden 2 während der Fräsbearbeitung alternativ in derselben Spurbahn 18 in Eingriff mit dem Profil 3 kommen. Wie zu erkennen erstrecken sich die Ausformungen 6, 6' der Schneidenträger S1, S8 von verschiedenen Seiten bis etwa zur Hälfte der Breite B der Schneidenträger S1, S8, wobei die Ausformungen 6, 6' der Schneidenträger S1, S8 der verschiedenen Gruppen auf unterschiedlichen Seiten angeordnet sind. Zwei nach dem in Figur 4 gezeigten Prinzip unabhängig aktivierbare Betätigungskörper 7, 7` ermöglichen so die unabhängige Auslenkung der Schneidenträger S1, S8 verschiedener Gruppen während der Bearbeitung derselben Spurbahn 18 entlang einer weitgehend ebenen Bahn 8. Mit anderen Worten erfüllen also beide Gruppen von Schneidenträgern S1, S8 die Voraussetzungen des Drehhobelns, sodass eine konstant hohe Bearbeitungsqualität erreicht und dennoch durch die Verwendung abweichender Schneidengeometrien der Schneiden 2, 2' der Schneidenträger S1, S8 unterschiedliche Querprofilabschnitte in derselben Spurbahn 18 erzeugt werden können.

Die Betätigungskörper 7, 7' sind hierzu auf der Welle 10 jeweils exzentrisch angeordnet, sodass eine Drehbewegung der Welle 10 zu einer alternativen Auslenkung des Betätigungskörpers 7 oder 7' führt, sodass entweder die Schneiden 2, 2' der Schneidenträger S1 oder S8 in derselben Spurbahn 18 mit dem Profil 3 in Eingriff kommen. Nicht dargestellt ist eine mögliche alternative Aktivierung der Schneidenträger S1 oder S8 durch einen gemeinsamen Betätigungskörper, welcher hierzu in axialer Richtung der Welle 10 translatorisch zwischen den dargestellten Positionen der Betätigungskörper 7 und 7' beweglich ist.

Die sich aus der alternativen Aktivierung der Schneidenträger S1 oder S8 ergebenden verschiedenen Querprofilformen entsprechen den in der Figur 5 gezeigten Querprofilen, wobei aufgrund der jeweils zum Einsatz kommenden beweglichen Schneidenträger S1, S8 die Bearbeitungsqualität entsprechend wesentlich erhöht ist.

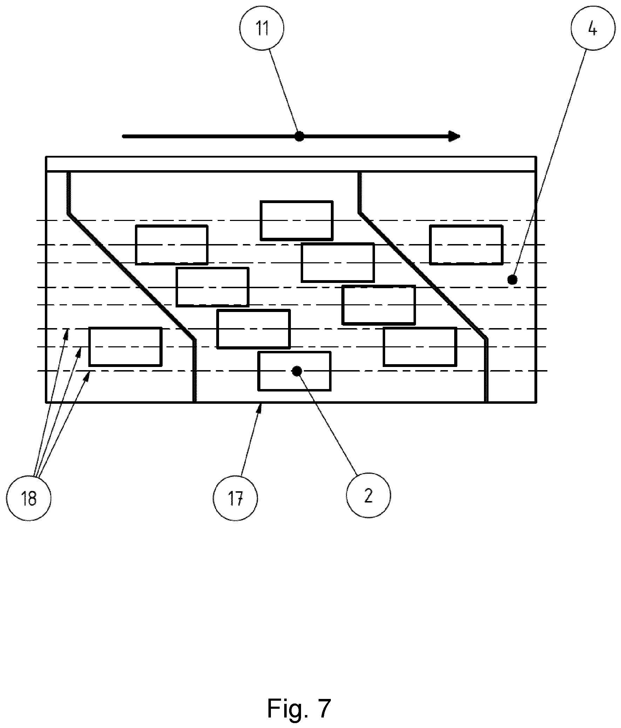

Figur 7 zeigt einen Ausschnitt der Ablauffläche des Fräskörpers 4 mit mehreren hinter- und nebeneinander angeordneten Schneiden 2. Die Schneiden 2 sind mehreren parallelen Spurbahnen 18 zugeordnet, um Spurbilder auf der bearbeiteten Oberfläche des in den Figuren 1 bis 3 dargestellten Profils 3 zu vermeiden. Der in die Richtung des Pfeils 11 bewegte Fräskörper 4 ist aus einzelnen Segmenten 17 zusammengesetzt. Die Segmente 17 sind an dem Fräskörper 4 lösbar fixierbar.

### BEZUGSZEICHENLISTE

| | | | |
|---|---|---|---|
| 1 | Vorrichtung | 16 | Arbeitsbewegung |
| 2, 2' | Schneide | 17 | Segment |
| 3 | Profil | 18 | Spurbahn |
| 4 | Fräskörper | 19 | Antrieb |
| 5 | Aufnahme | | |
| | | α, α' | Winkellage |
| 6, 6' | Ausformung | B | Breite |
| 7a, 7b, 7, 7' | Betätigungskörper | S, S1, S2, S8 | Schneidenträger |
| 8 | Bahn | | |
| 9 | Achse | | |
| 10 | Welle | | |
| 11 | Pfeilrichtung | | |
| 12 | Pfeilrichtung | | |
| 13 | Bereich | | |
| 14 | Rückstelleinrichtung | | |
| 15 | Umlaufbahn | | |

## Patentansprüche

1. Eine insbesondere mobile Vorrichtung (1) mit einem rotationsbeweglich antreibbaren Fräskörper (4) mit mehreren jeweils eine geometrisch bestimmte Schneide (2, 2') aufweisenden Schneidenträgern (S, S1, S2, S8) zur spanabhebenden Bearbeitung eines ein Querprofil aufweisenden Profils (3), insbesondere einer Schiene eines Gleiskörpers, wobei die Vorrichtung (1) mehrere relativ zu dem Fräskörper (4) bewegliche Schneidenträger (S1, S8) aufweist, die mittels zumindest eines Betätigungskörpers (7, 7', 7a, 7b) zur Einstellung unterschiedlicher Arbeitspositionen während des Eingriffs der Schneide (2, 2') des jeweiligen beweglichen Schneidenträgers (S1, S8) in das Profil (3) an dem Fräskörper (4) radial auslenkbar angeordnet sind, indem der Betätigungskörper (7, 7', 7a, 7b) während der rotierenden Umlaufbewegung des Fräskörpers (4) zyklisch mit einer eine Steigung aufweisenden Ausformung (6, 6') des Schneidenträgers (S1, S8) in Kontakt kommt, **dadurch gekennzeichnet, dass** eine erste Funktionsstellung, in der ausschließlich die Schneiden (2, 2') einer ersten Gruppe von beweglichen Schneidenträgern (S1) einer Spurbahn (18) oder mehrerer Spurbahnen (18) mit dem Profil (3) in Eingriff kommen, und eine zweite Funktionsstellung oder weitere Funktionsstellungen einstellbar sind, in der ausschließlich die Schneiden (2, 2') einer zweiten Gruppe oder einer weiteren Gruppe mehrerer an dem Fräskörper (4) angeordneter Schneidenträger (S2, S8) derselben Spurbahn (18) oder derselben Spurbahnen (18) mit dem Profil (3) in Eingriff kommen.

2. Vorrichtung (1) nach Anspruch 1, **dadurch gekennzeichnet, dass** zumindest einzelne der Schneidenträger (S2) der zweiten Gruppe unbeweglich an dem Fräskörper (4) angeordnet sind.

3. Vorrichtung (1) nach Anspruch 1 oder 2, **dadurch gekennzeichnet, dass** die beweglichen Schneidenträger (S1) der ersten Gruppe und/oder die beweglichen Schneidenträger (S8) einer weiteren Gruppe mittels eines jeweiligen Betätigungskörpers (7, 7`) auslenkbar ausgeführt sind.

4. Vorrichtung (1) nach zumindest einem der vorhergehenden Ansprüche, **dadurch gekennzeichnet, dass** die Vorrichtung (1) mehrere in unterschiedlichen, in Richtung der Rotationsachse (9) in benachbarten Spurbahnen (18) nebeneinander angeordnete Schneidenträger (S1, S2, S8) aufweist, wobei zumindest in einer einer Lauffläche des Querprofils zugeordneten Spurbahn (18) ausschließlich bewegliche Schneidenträger (S1, S8) angeordnet sind und zumindest in einer einem lateralen und/oder einem medialen Randbereich des Querprofils zugeordneten Spurbahn (18) verschiedene Gruppen von beweglichen Schneidenträgern (S1, S8) und unbeweglichen Schneidenträgern (S2) angeordnet sind.

5. Vorrichtung (1) nach zumindest einem der vorhergehenden Ansprüche, **dadurch gekennzeichnet, dass** benachbarte Schneidenträger (S1, S2, S8) verschiedener Spurbahnen (18) in Umfangsrichtung mit einem Versatz angeordnet sind.

6. Vorrichtung (1) nach zumindest einem der vorhergehenden Ansprüche, **dadurch gekennzeichnet, dass** die beweglichen Schneidenträger (S1, S8) und/oder unbeweglichen Schneidenträger (S2) verschiedener Gruppen derselben Spurbahn (18) in Umfangsrichtung abwechselnd und/oder gleichverteilt an dem Profilkörper (4) angeordnet sind.

7. Vorrichtung (1) nach zumindest einem der vorhergehenden Ansprüche, **dadurch gekennzeichnet, dass** die insbesondere nockenförmige Ausformung (6, 6') eine Steigung aufweist, gegen die der Betätigungskörper (7, 7', 7a, 7b) zyklisch während der Bearbeitung gleitend und/oder rollend anliegt.

8. Vorrichtung (1) nach Anspruch 7, **dadurch gekennzeichnet, dass** die nockenförmige Ausformung (6, 6') zumindest abschnittsweise konkav und/oder konvex ausgeführt ist.

9. Vorrichtung (1) nach zumindest einem der vorhergehenden Ansprüche, **dadurch gekennzeichnet, dass** die Vorrichtung (1) mehrere unabhängig voneinander einstellbare Betätigungskörper (7, 7', 7a, 7b) aufweist.

10. Verfahren zur spanabhebenden Bearbeitung eines Profils (3) mittels einer Vorrichtung (1) nach zumindest einem der vorhergehenden Ansprüche, bei dem die Schneide (2, 2') während der spanabhebenden Bearbeitung des Profils (3) zyklisch gegenüber einer Achse (9) des Fräskörpers (4) ausgelenkt und dadurch entlang einer ebenen Bahn (8) bewegt wird, **dadurch gekennzeichnet, dass** während der Bearbeitung des Profils (3) und zur Erzeugung verschiedener Querprofilgeometrien desselben Profils (3) zumindest ein Betätigungskörper (7, 7', 7a, 7b) aktiviert wird und dadurch entweder die Schneiden (2, 2') einer ersten Gruppe von beweglichen Schneidenträgern (S1, S8) zumindest einer Spurbahn (18) oder die Schneiden (2, 2') einer zweiten Gruppe mehrerer an dem Fräskörper (4) angeordneter Schneidenträger (S1, S2, S8) derselben Spurbahn (18) oder derselben Spurbahnen in das Profil (3) eingreifen.

## Claims

1. An in particular mobile apparatus (1) having a milling member (4) which can be driven in a rotationally movable manner and which has a plurality of blade carriers (S, S1, S2, S8) which have in each case a geometrically determined blade (2, 2') for the chip-removing processing of a profile (3) which has a transverse profile, in particular a rail of a track member, wherein the apparatus (1) has a plurality of blade carriers (S1, S8) which can be moved relative to the milling member (4) and which, by means of at least one actuation member (7, 7', 7a, 7b) in order to adjust different working positions during the engagement of the blade (2, 2') of the respective movable blade carrier (S1, S8) in the profile (3), are arranged so as to be able to be radially deflected on the milling member (4) by the actuation member (7, 7', 7a, 7b) during the rotating revolving movement of the milling member (4) cyclically coming into contact with a formation (6, 6'), which has an inclination, of the blade carrier (S1, S8), **characterized in that** there can be adjusted a first functional position, in which exclusively the blades (2, 2') of a first group of movable blade carriers (S1) of a track path (18) or a plurality of track paths (18) move into engagement with the profile (3), and a second functional position or other functional positions, in which exclusively the blades (2, 2') of a second group or another group of a plurality of blade carriers (S2, S8), which are arranged on the milling member (4), of the same track path (18) or the same track paths (18) move into engagement with the profile (3).

2. Apparatus (1) according to Claim 1, **characterized in that** at least individual blade carriers of the blade carriers (S2) of the second group are arranged in a non-movable manner on the milling member (4).

3. Apparatus (1) according to Claim 1 or 2, **characterized in that** the movable blade carriers (S1) of the first group and/or the movable blade carriers (S8) of another group are configured to be able to be deflected by means of a respective actuation member (7, 7').

4. Apparatus (1) according to at least one of the preceding claims, **characterized in that** the apparatus (1) has a plurality of differing blade carriers (S1, S2, S8) which are arranged beside each other in the direction of the rotation axis (9) in adjacent track paths (18), wherein exclusively movable blade carriers (S1, S8) are arranged at least in one track path (18) which is associated with a running face of the transverse profile and different groups of movable blade carriers (S1, S8) and non-movable blade carriers (S2) are arranged at least in one track path (18) which is associated with a lateral and/or a medial edge region of the transverse profile.

5. Apparatus (1) according to at least one of the preceding claims, **characterized in that** adjacent blade carriers (S1, S2, S8) of different track paths (18) are arranged with an offset in a circumferential direction.

6. Apparatus (1) according to at least one of the preceding claims, **characterized in that** the movable blade carriers (S1, S8) and/or non-movable blade carriers (S2) of different groups of the same track path (18) are arranged in the circumferential direction alternately and/or in a state distributed uniformly on the profile member (4).

7. Apparatus (1) according to at least one of the preceding claims, **characterized in that** the in particular cam-like formation (6, 6') has an inclination, against which the actuation member (7, 7', 7a, 7b) cyclically abuts in a sliding and/or rolling manner during the processing operation.

8. Apparatus (1) according to Claim 7, **characterized in that** the cam-like formation (6, 6') is configured at least partially in a concave and/or convex manner.

9. Apparatus (1) according to at least one of the preceding claims, **characterized in that** the apparatus (1) has a plurality of actuation members (7, 7', 7a, 7b) which can be adjusted independently of each other.

10. Method for the chip-removing processing of a profile (3) by means of an apparatus (1) according to at least one of the preceding claims, wherein the blade (2, 2') during the chip-removing processing of the profile (3) is cyclically deflected with respect to an axis (9) of the milling member (4) and is thereby moved along a planar path (8), **characterized in that** during the processing of the profile (3) and, in order to produce different transverse profile geometries of the same profile (3), at least one actuation member (7, 7', 7a, 7b) is activated and thereby either the blades (2, 2') of a first group of movable blade carriers (S1, S8) of at least one track path (18) or the blades (2, 2') of a second group of a plurality of blade carriers (S1, S2, S8) which are arranged on the milling member (4) of the same track path (18) or the same track paths engage in the profile (3).

## Revendications

1. Dispositif (1), en particulier mobile, avec un corps de fraisage (4) apte à être entraîné en rotation, avec plusieurs porte-tranchants (S, S1, S2, S8) présentant chacun un tranchant (2, 2') géométriquement déterminé, pour l'usinage par enlèvement de copeaux d'un profilé (3) présentant un profilé transversal, en particulier d'un rail d'une voie ferrée, le dispositif (1) comportant plusieurs porte-tranchants (S1, S8) mobiles par rapport au corps de fraisage (4), qui sont agencés sur le corps de fraisage (4) de manière à être mobiles radialement au moyen d'au moins un corps d'actionnement (7, 7', 7a, 7b) pour le réglage de différentes positions de travail lors de l'engagement du tranchant (2, 2') du porte-tranchant mobile respectif (S1, S8) avec le profilé (3), en ce que le corps d'actionnement (7, 7', 7a, 7b) vient en contact de manière cyclique, pendant le mouvement de rotation du corps de fraisage (4), avec une conformation (6, 6') du support de tranchants (S1, S8) présentant une pente, **caractérisé en ce qu'**une première position fonctionnelle, dans laquelle seuls les tranchants (2, 2') d'un premier groupe de porte-tranchants mobiles (S1) d'une voie formant piste (18) ou de plusieurs voies formant piste (18) viennent en engagement avec le profilé (3), et une deuxième position fonctionnelle ou d'autres positions fonctionnelles sont aptes à être réglées, dans lesquelles seuls les tranchants (2, 2') d'un deuxième groupe ou d'un autre groupe de plusieurs porte-tranchants (S2, S8) agencés sur le corps de fraisage (4) de la même voie formant piste (18) ou des mêmes voies formant piste (18) viennent en engagement avec le profilé (3).

2. Dispositif (1) selon la revendication 1, **caractérisé en ce qu'**au moins certains des porte-tranchants (S2) du deuxième groupe sont agencés de manière immobile sur le corps de fraisage (4).

3. Dispositif (1) selon la revendication 1 ou la revendication 2, **caractérisé en ce que** les porte-tranchants mobiles (S1) du premier groupe et/ou les porte-tranchants mobiles (S8) d'un autre groupe sont réalisés de manière à pouvoir être déplacés au moyen d'un corps d'actionnement respectif (7, 7').

4. Dispositif (1) selon au moins l'une des revendications précédentes, **caractérisé en ce que** le dispositif (1) présente plusieurs porte-tranchants (S1, S2, S8) agencés les uns à côté des autres dans différentes voies formant piste (18) voisines dans le sens de l'axe de rotation (9), dans lequel, au moins dans une voie formant piste (18) associée à une surface de roulement du profilé transversal, sont agencés exclusivement des porte-tranchants mobiles (S1, S8) et, au moins dans une voie formant piste (18) associée à une zone marginale latérale et/ou médiale du profilé transversal, sont agencés différents groupes de porte-tranchants mobiles (S1, S8) et de porte-tranchants immobiles (S2).

5. Dispositif (1) selon au moins l'une des revendications précédentes, **caractérisé en ce que** des porte-tranchants (S1, S2, S8) voisins de différentes voies formant piste (18) sont agencés avec un décalage dans la direction circonférentielle.

6. Dispositif (1) selon au moins l'une des revendications précédentes, **caractérisé en ce que** les porte-tranchants mobiles (S1, S8) et/ou les porte-tranchants immobiles (S2) de différents groupes d'une même voie (18) sont agencés sur le corps profilé (4) de manière alternée et/ou répartis de manière identique dans la direction circonférentielle.

7. Dispositif (1) selon au moins l'une des revendications précédentes, **caractérisé en ce que** la conformation (6, 6'), notamment en forme de came, présente une pente contre laquelle le corps d'actionnement (7, 7', 7a, 7b) s'appuie de manière cyclique en glissant et/ou en roulant pendant l'usinage.

8. Dispositif (1) selon la revendication 7, **caractérisé en ce que** la conformation (6, 6') en forme de came est réalisée au moins partiellement de manière concave et/ou convexe.

9. Dispositif (1) selon au moins l'une des revendications précédentes, **caractérisé en ce que** le dispositif (1) présente une pluralité de corps d'actionnement (7, 7', 7a, 7b) réglables indépendamment les uns des autres.

10. Procédé d'usinage par enlèvement de copeaux d'un profilé (3) au moyen d'un dispositif (1) selon au moins une des revendications précédentes, dans lequel le tranchant (2, 2') est déplacé de manière cyclique par rapport à un axe (9) du corps de fraisage (4) pendant l'usinage du profilé (3) par enlèvement de copeaux et est ainsi déplacé le long d'une trajectoire plane (8), **caractérisé en ce que**, pendant l'usinage du profilé (3) et pour produire différentes géométries de profilé transversal du même profilé (3), au moins un corps d'actionnement (7, 7', 7a, 7b) est activé et, de ce fait, soit les tranchants (2, 2') d'un premier groupe de porte-tranchants mobiles (S1, S8) d'au moins une voie formant piste (18), soit les tranchants (2, 2') d'un deuxième groupe de plusieurs porte-tranchants (S1, S2, S8) de la même voie formant piste (18) ou des mêmes voies de roulement, agencés sur le corps de fraisage (4), viennent en engagement avec le profilé (3).
